# EUROPÄISCHE PATENTSCHRIFT

(11) **EP 2 386 441 B1**
(45) Veröffentlichungstag und Bekanntmachung des Hinweises auf die Patenterteilung: **14.01.2015**
(21) Anmeldenummer: 11003814.8
(22) Anmeldetag: 10.05.2011
(51) Int. Cl.: B60N 2/52, B60N 2/50, B60N 2/10, B60N 2/12, B60N 2/20

(54) **Fahrzeugsitz**
Vehicle seat
Siège de véhicule

(30) Priorität: 10.05.2010 DE 102010020091
(43) Veröffentlichungstag der Anmeldung: 16.11.2011
(73) Patentinhaber: Johnson Controls GmbH, 51399 Burscheid (DE)
(72) Erfinder: Lettenmayer, Lars, 53819 Neunkirchen-Seelscheid (DE); Sooda, Jeevan, Mulund (W), Mumbai - 400 080 (IN); Radermacher, Markus, 50767 Köln (DE); Deshmukh, Harshal, 51399 Burscheid (DE); Woolston, Stuart, G75 8TZ Glasgow (GB); Funk, Stefan, 42799 Leichlingen (DE)
(74) Vertreter: Schwöbel, Thilo K.

(56) Entgegenhaltungen:
- EP-A1- 0 054 880
- WO-A1-91/04881
- WO-A2-2008/002373
- DE-U1- 20 312 733
- GB-A- 2 368 272
- GB-A- 191 224 412
- US-A- 3 338 632
- US-A1- 2009 189 407

## Beschreibung

### Stand der Technik

Die Erfindung betrifft einen Fahrzeugsitz, der in eine vorgegebene Verstellposition verfahrbar ist. Die vorliegende Erfindung geht dabei aus von einem Fahrzeugsitz, insbesondere ein Kraftfahrzeugsitz, mit einer Sitzbaugruppe und einem an einer Fahrzeugkarosserie befestigten Rahmen, wobei die Sitzbaugruppe relativ zum fahrzeugfesten Rahmen mittels einer Verstellbewegung von einer ersten Stellung in eine zweite Stellung bewegbar ist, wobei der Fahrzeugsitz zwei Dämpfungsorgane zum zumindest teilweisen Dämpfen der Verstellbewegung aufweist, welche zwischen der Sitzbaugruppe und dem Rahmen angeordnet sind, wobei jeweils erste Enden der Dämpfungsorgane entlang einer zur Fahrtrichtung senkrechten Querrichtung in einem Zentralbereich der Sitzbaugruppe befestigt sind und wobei die zweiten Enden der Dämpfungsorgane voneinander beabstandet an entlang der Querrichtung gegenüberliegenden Seiten des Rahmens befestigt sind. In vorteilhafter Weise wird somit eine vergleichsweise stabile und wirksame Dämpfung des Fahrzeugsitzes erzielt, wobei gleichzeitig der Freiraum unterhalb des Fahrzeugsitzes nicht oder nur geringfügig reduziert wird, so dass der Fußraum eines Fahrzeuginsassen, welcher beispielsweise auf einer in Fahrtrichtung hinter dem Fahrzeugsitz angeordneten Sitzbank Platz genommen hat, nicht beeinträchtigt wird. Auf diese Weise wird trotz des vergleichsweise einfachen Aufbaus ein hoher Sitzkomfort für alle Fahrzeuginsassen gewährleistet. Ferner kann der Freiraum zur Gepäckablage oder zur Installation zusätzlicher Fahrzeugausrüstung (beispielsweise Klimatisierungsleitungen oder -düsen) verwendet werden. Ein solcher Fahrzeugsitz ist beispielsweise aus der Druckschrift US 2009 / 0 189 407 A1 bekannt.

Ferner betrifft die Erfindung ein Verfahren zur Einstellung der Dämpfung bei einem Fahrzeugsitz, sowie eine Fahrzeugsitzanordnung aufweisend wenigstens einen Fahrzeugsitz.

Derartige zwischen einer ersten und zweiten Stellung verfahrbaren Fahrzeugsitze dienen beispielsweise dazu zwischen einer Gebrauchsstellung und einer Easy-Entry-Stellung verfahren zu werden. Fahrzeugsitze mit Easy-Entry-Funktion dienen zur Erleichterung des Einstiegs zu rückwärtigen Sitzgelegenheiten bzw. des Ausstiegs von dort. Sie sind aus dem Stand der Technik bekannt.

Hierbei besteht das Problem, dass durch eine schwungvolle Verstellbewegung des Fahrzeugsitzes eine Verletzungsgefahr für Fahrzeuginsassen ausgeht.

Aus dem Stand der Technik ist bekannt, die Verstellbewegung mit Hilfe von Dämpfungsvorrichtungen zu bremsen. Die Druckschrift DE 203 12 733 U1 offenbart beispielsweise eine Dämpfungseinrichtung für ein Sitzteil eines Fahrzeugsitzes mit klappbarer Rückenlehne, wobei das Sitzteil in seinem vorderen Bereich auf einer längs schwenkbaren Schwinge abgestützt ist und über ein Gestänge mit der Rücklehne verbunden ist und wobei ein Dämpfungselement an der Sitzschale des Sitzteiles angreift. Eine ähnliche Vorrichtung ist aus der Druckschrift DE 10 2005 018 637 A1 bekannt, wobei das Dämpfungselement hier in ein Vorschubgestänge integriert ist.

### Offenbarung der Erfindung

Die Aufgabe der vorliegenden Erfindung ist es, einen Fahrzeugsitz mit einer Dämpfungsfunktion bereitzustellen, welche eine von einer ersten Stellung in eine zweite Stellung gerichtete Verstellbewegung wirksam dämpft und gleichzeitig gegenüber dem Stand der Technik einfacher aufgebaut, stabiler und kostengünstiger herstellbar ist. Der Erfindung liegt ferner die Aufgabe zugrunde, einen von einer ersten Stellung in eine zweite Stellung überführbaren Fahrzeugsitz zu schaffen, bei dem die Fahrzeuginsassen auf verbesserte Weise vor Verletzungen geschützt sind.

Gelöst wird diese Aufgabe erfindungsgemäß durch einen Fahrzeugsitz, gemäß dem Anspruch 1.

Ein Aspekt der Erfindung besteht darin, den Fahrzeugsitz mit zwei Dämpfungsorganen zu versehen, die fähig sind, eine Verstellbewegung des Fahrzeugsitzes und/oder einer Komponente des Fahrzeugsitzes (oder die Geschwindigkeit der Verstellbewegung) von einer ersten Stellung in eine zweite Stellung zumindest während einer bestimmten Phase der Verstellbewegung (d.h. zumindest während eines Anteils des Verstellweges) zu dämpfen und/oder zu reduzieren.

In vorteilhafter Weise wird die Verstellbewegung durch die Dämpfungsorgane zumindest teilweise gebremst und/oder gedämpft, so dass eine von dem sich schwungvoll in die zweite Stellung bewegenden Fahrzeugsitz ausgehende potentielle Verletzungsgefahr für einen Fahrzeuginsassen, welcher beispielsweise auf einer entlang der Fahrtrichtung hinter dem Fahrzeugsitz angeordneten Sitzbank Platz genommen hat, ausgeräumt bzw. zumindest stark reduziert wird. Vorzugsweise wird vielmehr ein dosiertes und kontrolliertes Überführen des Fahrzeugsitzes von der ersten Stellung in die zweite Stellung gewährleistet. Die Dämpfungsorgane sind hierfür vorzugsweise derart ausgebildet, dass beim Verschwenken der Sitzbaugruppe von der ersten Stellung in die zweite Stellung von den Dämpfungsorganen zumindest teilweise eine entgegen der Verstellbewegung wirkende Gegenkraft ausgeübt wird, wodurch die Verstellbewegung zumindest zeitweise oder in einem bestimmten Teilbereich des Verstellweges gebremst bzw. gedämpft wird.

Der erfindungsgemäße Fahrzeugsitz ist im Vergleich zum Stand der Technik wesentlich einfacher ausgeführt und somit kostengünstiger herstellbar, da das Dämpfungsorgan insbesondere unmittelbar zwischen der Sitzbaugruppe und dem Rahmen angeordnet bzw. befestigt ist. Das Dämpfungsorgan erstreckt sich somit von der Sitzbaugruppe in Richtung des Rahmens. Vorzugsweise werden somit keine weiteren bewegbaren Koppelglieder benötigt, so dass der Fahrzeugsitz wesentlich störunanfälliger ist und weniger Verschleißteile aufweist. Ferner ist der Winkel zwischen der durch die Verstellbewegung auf das Dämpfungsorgan wirkenden Kraft und die von dem Dämpfungsorgan ausgehenden Kraft möglichst nahe an 180 Grad, so dass eine effektive Dämpfung erzielt wird. Darüber hinaus ist der Fahrzeugsitz aufgrund der günstigeren Hebelverhältnisse deutlich stabiler, wodurch sich die Sicherheit für die Fahrzeuginsassen beispielsweise im Falle eines Unfalls deutlich erhöht.

Der Rahmen im Sinne der vorliegenden Erfindung umfasst insbesondere eine Befestigung des Fahrzeugsitzes an der Fahrzeugkarosserie. Vorzugsweise umfasst der Rahmen ein karosseriefestes Basisteil und ein gegenüber dem Basisteil in Längsrichtung verschiebbares Aufsatzteil. Das Basisteil und das Aufsatzteil bilden zusammen eine Sitzlängsverstellung. Das Dämpfungsorgan ist vorzugsweise mit einem ersten Ende direkt an der Sitzbaugruppe und mit einem entgegengesetzten zweiten Ende direkt am Aufsatzteil befestigt.

Beispielsweise handelt es sich bei der ersten Stellung um eine Easy-Entry-Stellung und bei der zweiten Stellung um eine Design-Stellung (auch als Gebrauchsstellung bezeichnet). Vorzugsweise ist die Sitzbaugruppe in der Easy-Entry-Stellung in einer gegenüber der Gebrauchsstellung angehobenen und/oder in Fahrtrichtung verschwenkten Position. Denkbar wäre aber auch, dass es sich bei der ersten Stellung um eine Cargo-Stellung und bei der zweiten Stellung um die Gebrauchsstellung handelt.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass das Dämpfungsorgan eine Gasdruckfeder oder eine andere, beispielsweise hydraulische, Kolben-Zylinder-Einrichtung umfasst.

Erfindungsgemäß ist vorgesehen, dass die beiden Dämpfungsorgane derart angeordnet sind, dass in der ersten Stellung die Mittellängsachsen der zwei Dämpfungsorgane einen ersten Winkel von im Wesentlichen 90 Grad zwischen sich einschließen und/oder dass in der zweiten Stellung die Mittellängsachsen der zwei Dämpfungsorgane einen ersten Winkel zwischen 150 und 170 Grad zwischen sich einschließen. Es hat sich in einer für den Fachmann überraschenden und nicht vorhersehbaren Weise gezeigt, dass bei derartigen Winkelverhältnissen vorteilhafterweise eine besonders gute Stabilität und gleichzeitig verhältnismäßig gute Dämpfungseigenschaften zu erzielen sind.

Erfindungsgemäß ist es ebenfalls vorgesehen, dass die beiden Dämpfungsorgane derart angeordnet sind, dass die während der Verstellbewegung jeweils auf die Dämpfungsorgane wirkende Kraft mit der jeweiligen Mittellängsachse einen definierten zweiten Winkel einschließt, wobei zur Einstellung einer gewünschten Dämpfungswirkung der zweite Winkel justierbar ist. Dies hat den Vorteil, dass die Dämpfungswirkung allein durch eine entsprechende Justierung der Anordnung der Dämpfungsorgane eingestellt werden kann, so dass hierfür insbesondere keine unterschiedlichen Dämpfungsorgane notwendig sind. Vorteilhafterweise können somit insbesondere verschiedene Fahrzeugsitztypen mit den gleichen Dämpfungsorganen ausgestattet werden, wobei je nach Art der Verstellbewegung (beispielsweise aufgrund unterschiedlicher Gewichte der Fahrzeugsitztypen) die Dämpfungsorgane so angeordnet werden, dass stets optimale Dämpfungseigenschaften erzielt werden können. Vorteilhafterweise wird hierbei insbesondere die Position der ersten Enden an der Sitzbaugruppe und/oder die Position der zweiten Enden am Rahmen entsprechend gewählt.

Gemäß einer bevorzugten Ausführungsform der vorliegenden Erfindung ist vorgesehen, dass die beiden Dämpfungsorgane bezüglich einer zur Querrichtung senkrechten Mittelebene des Fahrzeugsitzes spiegelbildlich zueinander angeordnet sind. Auf diese Weise wird eine hohe Symmetrie erzielt, welche verhindert, dass während der Verstellbewegung eine auf die Sitzbaugruppe wirkende unerwünschte Rotationskraft auftritt.

Ein weiterer Gegenstand der vorliegenden Erfindung ist ein Verfahren zur Einstellung der Dämpfung bei einem erfindungsgemäßen Fahrzeugsitz, wobei die von den zwei Dämpfungsorgan ausgehende Dämpfungswirkung dadurch eingestellt wird, dass ein zweiter Winkel zwischen einer Mittellängsachse des Dämpfungsorgans und einer während der Verstellbewegung auf das Dämpfungsorgan wirkenden Kraft justiert wird. Vorzugsweise wird zur Justierung des zweiten Winkels der Befestigungspunkt des Dämpfungsorgans an der Sitzbaugruppe und/oder am Rahmen entsprechend positioniert.

Ein weiterer Gegenstand der vorliegenden Erfindung ist eine Fahrzeugsitzanordnung mit wenigstens drei in Fahrtrichtung hintereinander angeordneten Sitzreihen, wobei wenigstens die erste und/oder die zweite Sitzreihe einen erfindungsgemäßen Fahrzeugsitz aufweist.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Rückansicht eines Fahrzeugsitzes in der ersten Stellung, hier die Easy-Entry-Stellung, gemäß einer beispielhaften Ausführungsform der vorliegenden Erfindung.
- **Figur 2**: zeigt eine schematische Seitenansicht des Fahrzeugsitzes in der ersten Stellung gemäß der beispielhaften Ausführungsform der vorliegenden Erfindung.
- **Figur 3**: zeigt eine schematische Rückansicht des Fahrzeugsitzes in der zweiten Stellung, hier die Gebrauchsstellung, gemäß der beispielhaften Ausführungsform der vorliegenden Erfindung.
- **Figur 4**: zeigt eine schematische Seitenansicht des Fahrzeugsitzes in der zweiten Stellung gemäß der beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

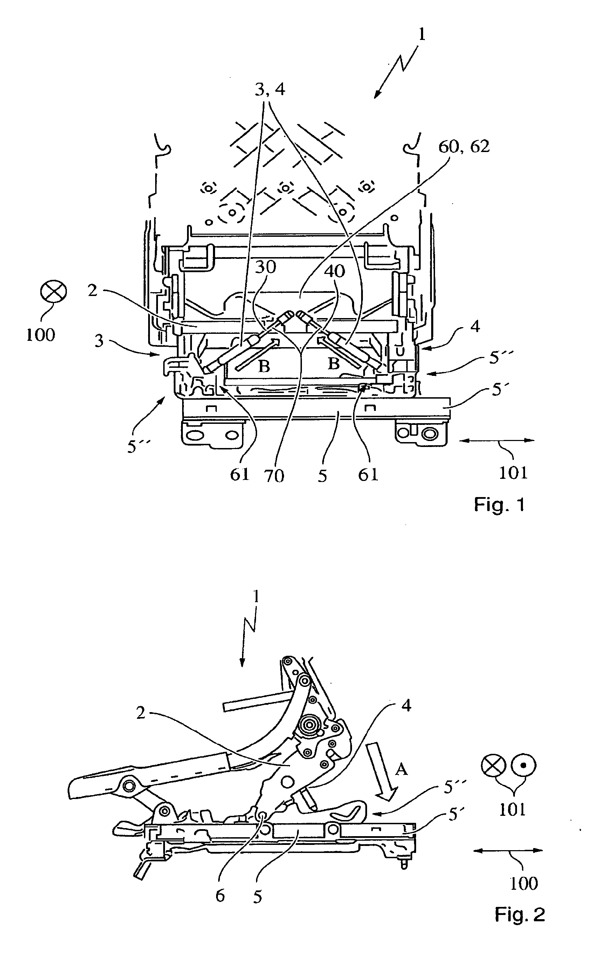

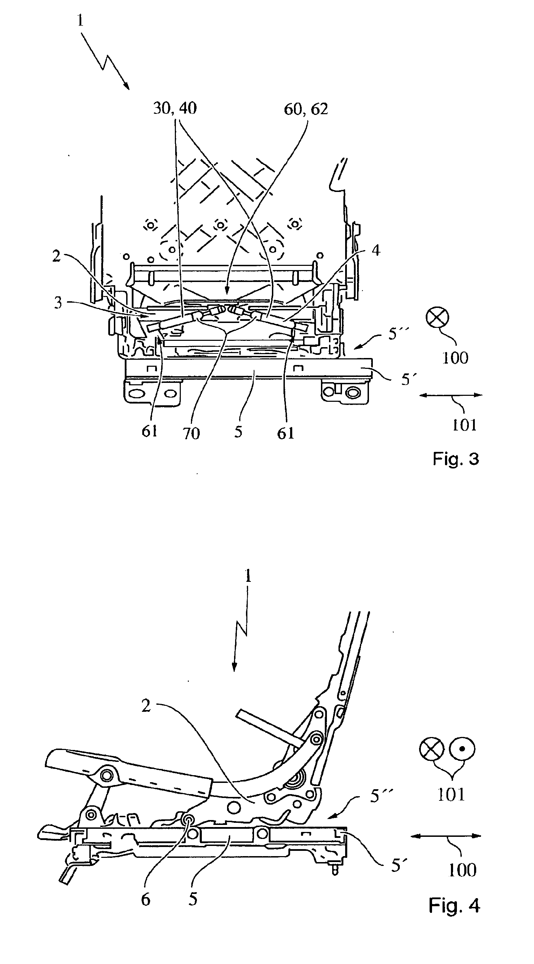

In **Figur 1** ist ein Fahrzeugsitz 1 in der ersten Stellung teilweise und entgegen der Fahrtrichtung 100 des nicht abgebildeten Fahrzeugs (also von hinten) gezeigt. Die erste Stellung umfasst im vorliegenden Beispiel eine Easy-Entry-Position, in welcher eine Sitzbaugruppe 2 des Fahrzeugsitzes 1 um eine zur Fahrtrichtung 100 senkrechte Schwenkachse 6 in Fahrtrichtung 100 verschwenkt ist. Eine Sitzfläche des Fahrzeugsitzes 1 befindet sich daher in einer gegenüber der Gebrauchsstellung (dargestellt in Figuren 3 und 4) angehobenen Position, so dass der Zugang zu in Fahrtrichtung 100 hinter dem Fahrzeugsitz 1 angeordneten Sitzbänken (aus Gründen der Übersichtlichkeit nicht dargestellt) ermöglicht bzw. erleichtert wird. Der Fahrzeugsitz 1 ist somit insbesondere für die zweite Sitzreihe für ein Fahrzeug bzw. einer Fahrzeugsitzanordnung mit mehr als zwei Sitzreihen geeignet bzw. Teil einer entsprechenden Fahrzeugsitzanordnung.

Der Fahrzeugsitz 1 umfasst eine Sitzbaugruppe 2 (im Folgenden auch als Rücksitzbaugruppe bezeichnet) und einen Rahmen 5 (im Folgenden auch als teilweise feststehender unterer Rahmen bezeichnet). Bei einem Verschwenken des Fahrzeugsitzes 1 von der in Figuren 1 und 2 illustrierten ersten Stellung in eine in Figuren 3 und 4 illustrierten zweiten Stellung wird insbesondere die Sitzbaugruppe 2 gegenüber dem Rahmen 5 verschwenkt. Zumindest ein Basisteil 5' des Rahmens 5 bleibt während der Verstellbewegung A feststehend.

Der Rahmen 5 umfasst eine Befestigung des Fahrzeugsitzes 1 an der Fahrzeugkarosserie. Der Rahmen 5 weist hierzu ein karosseriefestes Basisteil 5' und ein gegenüber dem Basisteil 5' in Längsrichtung 100 verschiebbares Aufsatzteil 5" auf, wobei das Basisteil 5' und das Aufsatzteil 5" zusammen einen Sitzlängsverstellmechanismus bilden. Das Aufsatzteil 5" umfasst hierzu ein oberes Schienenelement, welches mit einem unteren Schienenelement des Basisteils 5" derart gekoppelt ist, dass der Fahrzeugsitz 1 zur Längsverstellung parallel oder antiparallel zur Fahrtrichtung 100 gegenüber der Fahrzeugkarosserie linear verschiebbar ist.

Die Easy-Entry-Funktion wird durch Lösen der vorwärts schwenkbar angeordneten Rücksitzbaugruppe 2 aktiviert, wodurch die Sitzbaugruppe 2 von der ersten Stellung entlang eines Verstellweges und in Form einer Verstellbewegung A in die zweite Stellung verschwenkt wird.

Der Fahrzeugsitz 1 weist zwei Dämpferorgane 3, 4 auf, welche zum zumindest teilweisen Dämpfen der Verstellbewegung A vorgesehen sind. Mit anderen Worten: Die Verstellbewegung oder die Geschwindigkeit der Verstellbewegung wird mittels der Dämpferorgane 3, 4 zumindest während einer bestimmten Phase der Verstellbewegung, d.h. zumindest während eines Anteils des Verstellweges, gedämpft und/oder gebremst.

Die zwei Dämpferorgane 3, 4, bei denen es sich im vorliegenden Beispiel jeweils um eine Gasdruckfeder 3, 4 handelt, sind zwischen der Rücksitzbaugruppe 2 und dem unteren Rahmen 5 angeordnet, der seinerseits teilweise fest, insbesondere entlang einer zur Fahrtrichtung 100 senkrechten Richtung, bezüglich der Fahrzeugkarosserie angeordnet ist. Die Gasruckfedern 3, 4 sind mit einem ersten Ende 60 direkt an der Sitzbaugruppe 2 und mit einem entgegengesetzten zweiten Ende 61 direkt am Aufsatzteil 5" befestigt.

Die Gasdruckfedern 3, 4 sind in Y-Richtung (auch als Querrichtung 101 bezeichnet, die quer zur Fahrtrichtung 100 verläuft) zueinander versetzt seitlich am Fahrzeugsitz 1 angeordnet, so dass unter der Rücksitzbaugruppe 2 ausreichend Freiraum verfügbar ist. Hierzu ist jeweils das erste Ende 60 der Dämpfungsorgane 3, 4 entlang der Querrichtung 101 in einem Zentralbereich 62 der Sitzbaugruppe 2 befestigt, während die zweiten Enden 61 der Dämpfungsorgane 3, 4 voneinander beabstandet an entlang der Querrichtung 101 gegenüberliegenden Seiten des Rahmens 5 befestigt sind. Die beiden Dämpfungsorgane 3, 4 sind somit als auf dem Kopf stehendes "V" angeordnet (auch als giebelförmig bezeichnet). Hierbei ist besonders wichtig, dass der Abstand zwischen den zweiten Enden 61 deutlich größer als der Abstand zwischen den ersten Enden ist, um ausreichend Fußraum unter dem Fahrzeugsitz 1 zu gewährleisten.

Die als Gasdruckfedern 3, 4 ausgebildeten Dämpfungsorgane 3, 4 sind vorzugsweise jeweils mit ihren Kolbenstangen 30, 40 an der Sitzbaugruppe 2 befestigt und jeweils mit ihren die Kolbenstangen 30, 40 aufnehmenden Zylinderelementen an dem Aufsatzteil 5" des Rahmens 5 befestigt.

Die Kolbenstange 30, 40 jeder Gasdruckfeder 3, 4 ist bei der Situation von Figur 1, d.h. in der ersten Stellung, ausgefahren. Die Mittelllängsachsen der Gasdruckfedern 3, 4 schließen zwischen sich einen annähernd rechten ersten Winkel 70, d.h. einen ersten Winkel 70 von im Wesentlichen 90 Grad, ein.

In **Figur 2** ist der in Figur 1 illustrierte Fahrzeugsitz 1 in seitlicher, teilweiser Darstellung abgebildet. Der Fahrzeugsitz 1 befindet sich, wie in Figur 1, in der Easy-Entry-Position. Die Rücksitzbaugruppe 2 befindet sich daher in einer verhältnismäßig steilen oder angehobenen Lage.

Bei der Verstellbewegung A der Rücksitzbaugruppe 2 (die in der durch den Pfeil A angedeutet Richtung erfolgt) von der Easy-Entry-Position in die in Fig. 3 und 4 dargestellte Designposition (auch als Gebrauchsstellung bezeichnet) entsteht zumindest während einer Endphase der Verstellbewegung A (d.h. zumindest kurz vor dem Erreichen der Designposition) durch die Gasdruckfedern 3, 4 eine Dämpfungswirkung, also eine entgegen der Verstellbewegung A wirkende Gegenkraft oder Dämpfungskraft. Die Gegenkräfte wirken in der durch die Pfeile B in Figur 1 angedeuteten Richtung. Die Gegenkräfte werden dadurch erzeugt, dass die Gasdruckfedern 3, 4 durch die Verstellbewegung A jeweils zusammengedrückt werden, d.h. die Kolbenstangen 30, 40 werden entgegen den Gasdruck in die Zylinderelemente eingefahren.

In **Figur 3** ist eine schematische Rückansicht des Fahrzeugsitzes 1 in der zweiten Stellung, hier die Gebrauchsstellung, gemäß der beispielhaften Ausführungsform der vorliegenden Erfindung dargestellt. Die Figur 3 zeigt in teilweiser Darstellung und in Rückansicht von hinten den Fahrzeugsitz 1 in Design-Position. Die Kolbenstangen 30, 40 jeder Gasdruckfeder 3, 4 sind jetzt eingefahren und die Mittellängsachsen der Gasdruckfedern 3, 4 schließen zwischen sich einen stumpfen ersten Winkel 70 von ca. 150 bis 170 Grad ein.

Die spiegelbildlich bezüglich einer Mittelebene des Fahrzeugsitzes 1 (insbesondere entlang einer Ebene senkrecht zur Querrichtung 101) angeordneten Gasdruckfedern 3, 4 sind derart positioniert, dass ihre Mittelllängsachsen einen definierten zweiten Winkel mit der die Gasdruckfedern 3, 4 beaufschlagenden Kraft einschließen.

Die von den Gasdruckfedern 3, 4 aufgebauten Dämpferkräfte B (oder Gegenkräfte) hängen von dem zweiten Winkel ab, so dass das Maß der gewünschten Dämpfungswirkung durch entsprechendes Berechnen des zweiten Winkels (bzw. dessen zeitlichen Verlauf) definiert werden kann.

Zur Einstellung einer gewünschten Dämpfungswirkung ist der zweite Winkel dann entsprechend justierbar. Die von den Gasdruckfedern 3, 4 ausgehende Dämpfungswirkung wird vorzugsweise dadurch eingestellt, dass dieser zweite Winkel zwischen der Mittellängsachse der Dämpfungsorgane 3, 4 und während der Verstellbewegung A auf die Dämpfungsorgane 3, 4 wirkenden Kräfte justiert wird. Vorzugsweise werden zur Justierung des Winkels die Befestigungspunkte der Gasdruckfedern 3, 4 an der Sitzbaugruppe 2 und/oder am Rahmen 5 entsprechend positioniert.

In **Figur 4** ist eine schematische Seitenansicht des Fahrzeugsitzes 1 in der zweiten Stellung gemäß der beispielhaften Ausführungsform der vorliegenden Erfindung dargestellt, d.h. der in Figur 3 illustrierte Fahrzeugsitz 1 ist in Figur 4 in seitlicher, teilweiser Darstellung abgebildet. Figur 4 zeigt somit in seitlicher Darstellung den Fahrzeugsitz 1 in Design-Position. Die Rücksitzbaugruppe 2 wurde ausgehend von der steileren Lage gemäß der in Figur 2 illustrierten ersten Stellung in eine flachere Lage gemäß der zweiten Stellung geschwenkt.

### BEZUGSZEICHENLISTE

- 1: Fahrzeugsitz
- 2: Sitzbaugruppe
- 3, 4: Gasdruckfeder
- 5: Rahmen
- 5': Basisteil
- 5": Aufsatzteil
- 6: Schwenkachse
- 30, 40: Kolbenstange
- 60: Erste Enden
- 61: Zweite Enden
- 62: Zentralbereich
- 70: Erster Winkel
- 100: Fahrtrichtung
- 101: Querrichtung
- A: Richtung der Verstellbewegung
- B: Richtung der Dämpfungskräfte

## Patentansprüche

1. Fahrzeugsitz (1), insbesondere Kraftfahrzeugsitz, mit einer Sitzbaugruppe (2) und einem an einer Fahrzeugkarosserie befestigten Rahmen (5), wobei die Sitzbaugruppe (2) relativ zum Rahmen (5) mittels einer Verstellbewegung (A) von einer ersten Stellung in eine zweite Stellung bewegbar ist, wobei der Fahrzeugsitz (1) zwei Dämpfungsorgane (3, 4) zum zumindest teilweisen Dämpfen der Verstellbewegung (A) aufweist, welche zwischen der Sitzbaugruppe (2) und dem Rahmen (5) angeordnet sind, wobei jeweils erste Enden (60) der Dämpfungsorgane (3, 4) entlang einer zur Fahrtrichtung (100) senkrechten Querrichtung (101) in einem Zentralbereich (62) der Sitzbaugruppe (2) befestigt sind und wobei die zweiten Enden (61) der Dämpfungsorgane (3, 4) voneinander beabstandet an entlang der Querrichtung (101) gegenüberliegenden Seiten des Rahmens (5) befestigt sind, **dadurch gekennzeichnet, dass** die beiden Dämpfungsorgane (3, 4) derart angeordnet sind, dass in der ersten Stellung die Mittellängsachsen der zwei Dämpfungsorgane (3, 4) einen ersten Winkel (70) von im Wesentlichen 90 Grad zwischen sich einschließen und/oder dass in der zweiten Stellung die Mittellängsachsen der zwei Dämpfungsorgane (3, 4) einen ersten Winkel (70) zwischen 150 und 170 Grad zwischen sich einschließen und dass die beiden Dämpfungsorgane (3, 4) derart angeordnet sind, dass die während der Verstellbewegung (A) jeweils auf die Dämpfungsorgane (3, 4) wirkende Kraft mit der jeweiligen Mittellängsachse einen definierten zweiten Winkel einschließt und der zweite Winkel justierbar ist.

2. Fahrzeugsitz (1) nach Anspruch 1, wobei das Dämpfungsorgan (3, 4) derart ausgebildet ist, dass beim Verschwenken der Sitzbaugruppe (2) von der ersten Stellung in die zweite Stellung von dem Dämpfungsorgan (3, 4) zumindest teilweise eine entgegen der Verstellbewegung (A) wirkende Gegenkraft (B) ausgeübt wird.

3. Fahrzeugsitz (1) nach einem der vorhergehenden Ansprüche, wobei das Dämpfungsorgan (3, 4) eine Gasdruckfeder (3, 4) oder eine hydraulische Kolben-Zylinder-Einrichtung umfasst.

4. Fahrzeugsitz (1) nach einem der vorhergehenden Ansprüche, wobei die beiden Dämpfungsorgane (3, 4) bezüglich einer zur Querrichtung (101) senkrechten Mittelebene des Fahrzeugsitzes (1) spiegelbildlich zueinander angeordnet sind.

5. Fahrzeugsitz (1) nach einem der vorhergehenden Ansprüche, wobei die erste Stellung eine Easy-Entry-Stellung und die zweite Stellung eine Gebrauchsstellung umfasst, wobei die Sitzbaugruppe (2) in der Easy-Entry-Stellung in einer gegenüber der Gebrauchsstellung angehobenen und/oder in Fahrtrichtung (100) verschwenkten Position ist.

6. Verfahren zur Einstellung der Dämpfung bei einem Fahrzeugsitz (1) nach einem der vorhergehenden Ansprüche, **dadurch gekennzeichnet, dass** die von den zwei Dämpfungsorganen (3, 4) ausgehende Dämpfungswirkung dadurch eingestellt wird, dass ein zweiter Winkel zwischen einer Mittellängsachse jedes Dämpfungsorgans (3, 4) und einer während der Verstellbewegung (A) auf jedes Dämpfungsorgan (3, 4) wirkenden Kraft justiert wird.

7. Verfahren nach Anspruch 6, wobei zur Justierung des zweiten Winkels der Befestigungspunkt des Dämpfungsorgans (3, 4) an der Sitzbaugruppe (2) und/oder am Rahmen (5) entsprechend positioniert wird.

8. Fahrzeugsitzanordnung mit wenigstens drei in Fahrtrichtung (100) hintereinander angeordneten Sitzreihen, wobei wenigstens die erste und/oder die zweite Sitzreihe einen Fahrzeugsitz (1) nach einem der Ansprüche 1 bis 5 aufweist.

## Claims

1. Vehicle seat (1), in particular motor vehicle seat (1), with a seat assembly (2) and a frame (5) fastened to a vehicle bodywork, wherein the seat assembly (2) is movable relative to the frame (5) from a first position into a second position by means of an adjustment movement (A), wherein the vehicle seat (1) has two damping members (3, 4) for at least partially damping the adjustment movement (A), which are arranged between the seat assembly (2) and the frame (5), wherein the respective first ends (60) of the damping members (3, 4) are fastened along a direction transverse (101) to the direction of travel (100) in a central area (62) of the seat assembly (2) and wherein the second ends (61) of the damping members (3, 4) are fastened at a distance from one another on opposite sides of the frame (5) along the transverse direction (101), **characterised in that** the two damping members (3, 4) are arranged so that in the first position the central longitudinal axes of the two damping members (3, 4) enclose a first angle (70) of essentially 90 degrees between them and/or that in the second position the central longitudinal axes of the two damping members (3, 4) enclose a first angle (70) of between 150 und 170 degrees between them and that the two damping members (3, 4) are arranged so that the force acting during the adjustment movement (A) on the respective damping members (3, 4) encloses a defined second angle with the respective centre longitudinal axis and the second angle is adjustable.

2. Vehicle seat (1) in accordance with claim 1, wherein the damping member (3, 4) is configured so that, when the seat assembly (2) is pivoted from the first position to the second position, a counteracting force (B) is exerted by the damping member (3, 4) acting at least partially against the adjustment movement (A).

3. Vehicle seat (1) in accordance with one of the preceding claims, wherein the damping member (3, 4) comprises a gas pressure spring (3, 4) or a hydraulic piston-cylinder device.

4. Vehicle seat (1) in accordance with one of the preceding claims, wherein the two damping members (3, 4) are positioned in a mirror image arrangement in relation to a centre plane of the vehicle seats (1) perpendicular to the transverse direction (101).

5. Vehicle seat (1) in accordance with one of the preceding claims, wherein the first position comprises an easy-entry position and the second position a position of use, wherein the seat assembly (2) in the easy-entry position is in a raised position and/or is pivoted in the direction of travel (100) in relation to the position of use.

6. Method for setting damping with a vehicle seat (1) in accordance with one of the preceding claims, **characterised in that** the damping effect originating from the two damping members (3, 4) is set so that a second angle between a central longitudinal axis of each damping member (3, 4) and a force acting on each damping member (3, 4) during the adjustment movement (A) is adjusted.

7. Method in accordance with claim 6, wherein the fastening point of the damping member (3, 4) on the seat assembly (2) and/or on the frame (5) is positioned correspondingly for adjustment of the second angle.

8. Vehicle seat arrangement with at least three rows of seats positioned one behind the other in the direction of travel (100), wherein at least the first and/or the second row of seats has a vehicle seat (1) in accordance with one of the claims 1 to 5.

## Revendications

1. Siège de véhicule (1), en particulier siège de véhicule automobile, comportant un sous-ensemble de sièges (2) et un châssis (5) fixé à une carrosserie de véhicule, dans lequel le sous-ensemble de sièges (2) est mobile par rapport au châssis (5) au moyen d'un mouvement de réglage (A) d'une première position vers une seconde position, dans lequel le siège de véhicule (1) présente deux organes de suspension (3, 4) destinés à amortir au moins partiellement le mouvement de réglage (A) et qui sont disposés entre le sous-ensemble de sièges (2) et le châssis (5), dans lequel des premières extrémités (60) des organes de suspension (3, 4) sont respectivement fixées le long d'un sens transversal (101) perpendiculaire au sens de circulation (100) dans une zone médiane (62) du sous-ensemble de sièges (2) et dans lequel les secondes extrémités (61) des organes de suspension (3, 4) sont fixées espacées les unes des autres sur des faces opposées le long du sens transversal (101) du châssis (5), **caractérisé en ce que** les deux organes de suspension (3, 4) sont disposés de manière à ce que, dans la première position, les axes longitudinaux médians des deux organes de suspension (3, 4) circonscrivent entre eux un premier angle (70) de sensiblement 90 degrés et /ou que, dans la seconde position, les axes longitudinaux médians des deux organes de suspension (3, 4) circonscrivent entre eux un premier angle (70) compris entre 150 et 170 degrés et que les deux organes de suspension (3, 4) sont disposés de manière à ce que la force agissant respectivement pendant le mouvement de réglage (A) sur les organes de suspension (3, 4) circonscrit avec l'axe longitudinal médian respectif un second angle et que le second angle est ajustable.

2. Siège de véhicule (1) selon la revendication 1, dans lequel l'organe de suspension (3, 4) est réalisé de manière à ce que, en cas de pivotement du sous-ensemble de sièges (2) de la première position vers la seconde position (3, 4), une force conjuguée (B) agissant dans le sens inverse au mouvement de réglage (A) est exercée du moins partiellement par les organes de suspension (3, 4).

3. Siège de véhicule (1) selon une des revendications précédentes, dans lequel l'organe de suspension (3, 4) comprend un ressort de compression à gaz (3, 4) ou un dispositif hydraulique à piston et vérin.

4. Siège de véhicule (1) selon une des revendications précédentes, dans lequel les deux organes de suspension (3, 4) sont disposés en symétrie miroir l'un par rapport à l'autre par rapport à un plan médian perpendiculaire au sens transversal (101) du siège de véhicule (1).

5. Siège de véhicule (1) selon une des revendications précédentes, dans lequel la première position comprend une position d'entrée facile et la seconde position une position d'utilisation et dans lequel le sous-ensemble de sièges (2) est dans la position d'entrée facile en position surélevée par rapport à la position d'utilisation et/ou pivotée dans le sens de circulation (100).

6. Procédé de réglage de la suspension dans un siège de véhicule (1) selon une des revendications précédentes (3, 4), **caractérisé en ce que** l'effet de suspension émanant des deux organes de suspension (3, 4) se règle en ajustant un second angle entre un axe longitudinal médian de chaque organe de suspension (3, 4) et une force agissant pendant le mouvement de réglage (A) sur chaque organe de suspension (3, 4).

7. Procédé selon la revendication 6, dans lequel pour ajuster le second angle, le point de fixation de l'organe de suspension (3, 4) est positionné en conséquence au niveau du sous-ensemble de sièges (2) et/ou au niveau du châssis (5).

8. Agencement de sièges de véhicule comportant au moins trois rangées de sièges disposées les unes derrière les autres dans le sens de circulation (100), dans lequel au moins la première et/ou la seconde rangée de sièges présente un siège de véhicule (1) selon une des revendications 1 à 5.
